# EUROPEAN PATENT SPECIFICATION

(11) **EP 3 018 989 B1**
(45) Date of publication and mention of the grant of the patent: **19.06.2019**
(21) Application number: 14758683.8
(22) Date of filing: 10.07.2014
(51) Int. Cl.: A01B 71/06, A01D 75/30

(54) **IMPLEMENT AND WORK VEHICLE**
VORRICHTUNG UND ARBEITSFAHRZEUG
OUTIL ET VÉHICULE DE TRAVAIL

(30) Priority: 11.07.2013 NL 2011145
(43) Date of publication of application: 18.05.2016
(73) Proprietor: Vanmac Beheer B.V., 3824 MJ Amersfoort (NL)
(72) Inventor: VAN LOEN, Leonardus Joannes Antonius, 3871 JZ Hoevelaken (NL)
(74) Representative: Jilderda, Anne Ayolt
(86) International application number: PCT/NL2014/050472
(87) International publication number: WO 2015/005789

(56) References cited:
- GB-A- 339 342
- US-A- 2 753 674
- US-A- 5 076 044
- US-A1- 2003 029 151

## Description

The present invention relates to an implement comprising a number of work devices for the purpose of performing work therewith in an operative position, wherein the work devices comprise a work member and wherein the work devices comprise an input drive shaft.

An example of such an implement is a mowing device with a number of mowing modules for the purpose of working a ground surface, for instance a grass field, therewith. A mowing device is thus known from the Netherlands patent number NL 2004859 of applicant, wherein the implement comprises a number of rotary mowers as work devices which each comprise an input drive shaft which are coupled to a drive device provided at a central part of the implement. During operation the drive device drives the work devices via the input drive shafts in order to enable working of a ground surface. Another implement with the features of the preamble of claim 1 is known from US 2 753 674 A1.

Although a ground surface can be worked extremely well with the known implement, the drive of the different work devices forms a relatively complicated system with a relatively large number of components which on the one hand takes up space and on the other represents a relatively high cost.

The present invention therefore has for its object to provide an implement which is simplified particularly in this respect.

In order to achieve the intended object an implement with the features of claim 1 is provided.

Coupling the output shaft of a work device to the input shaft of the work device on the one side and the input shaft of a subsequent work device on the other side forms a single shaft line through a plurality of the work devices, whereby the work devices can be driven simultaneously. It is no longer necessary for this purpose that each work device has to be driven separately via separate drive lines. This makes the driving of the work devices simpler and moreover results in a weight-saving and lower production costs of the implement since fewer components are required.

Because the input drive shaft and output shaft here also form part of a continuous shaft which is coupled directly to the work member of the work device, a direct transmission from the shaft to the work member is realized. The work member inside the work device can hereby be set directly into operation by a rotation of the shaft without additional transmission means being required for this purpose between the drive shaft of the work device and the work member. The continuous shaft can be formed as one part, wherein the input and output shafts of the work device are integral and are carried centrally through the work device so that the implement has fewer separate components. Possible occurrence of wear between separate components in the implement is hereby precluded.

In a further preferred embodiment the implement according to the present invention is characterized in that the output shaft is coupled pivotally to the input drive shaft of a subsequent work device. A pivot point is hereby located between successive work devices which enables pivoting of the work devices relative to each other. Although they share a common drive line, the work devices can thus nevertheless be positioned independently relative to a ground surface so that it is possible to compensate per work device for possible unevenness in the ground surface.

In a further preferred embodiment the implement according to the present invention has the feature that a universal joint is provided between the output shaft and the input drive shaft of a subsequent work device. Such a joint between the successive work devices allows the freedom to displace the work devices in all directions relative to each other.

In a particular embodiment hereof the implement according to the present invention has the feature that between the output shaft and input drive shaft of a subsequent work device a cardan shaft is provided which is coupled on either side by means of a universal joint to the input drive shaft of a subsequent work device and the output shaft. The provision of a cardan shaft between the successive work devices is highly suitable for a high measure of freedom of displacement between successive work devices while retaining a suitable driving by means of a rotation of the drive shafts.

A further preferred embodiment of the implement according to the present invention is particularly characterized in that the cardan shaft is axially adjustable. An axial adjustability of the cardan shaft makes it possible to maintain an at least substantially constant distance between successive work devices in a longitudinal direction of the drive shafts, even when the successive work devices are displaced relative to each other in a direction transversely of the longitudinal direction of the drive shafts.

Such an axial adjustment of the cardan shaft can be realized in different ways. In a particular embodiment however, the implement according to the present invention is characterized in that the cardan shaft comprises a key body which is axially movable through a keyway of the cardan shaft. This makes the axial adjustment of the cardan shaft continuously adjustable so that a distance between successive work devices is guaranteed even in the case of a relative displacement of the work devices during operation of the implement.

A further preferred embodiment of the implement according to the present invention is characterized in that a number of the work devices lie in line, and in particular that the work devices extend from the implement by means of a support arm of a central part.

Although the above described central shared drive is advantageous for diverse types of implement, the implement according to the present invention comprises a reel mower, wherein the work devices are mowing reels with one or more cutting members, such as a cutting blade or cutting knife, rotating about a horizontal axis. A rotation movement of the input shaft can be easily transmitted here to the cutting member, since the rotation movement is the same as the movement of the cutting member about a horizontal axis which is required to be able to cut a crop such as grass on the ground surface. No additional means are necessary for this purpose. If desired, the input shaft can however be coupled to the cutting member via a transmission body such as for instance a gear wheel, this being particularly useful when use is made of an assembly of a plurality of cutting members, such as a plurality of cutting knives which are placed at regular distances from each other and which together form a cylindrical roll of cutting knives.

The present invention also relates to a work vehicle comprising a mobile frame with a main shaft and comprising an implement according to one or more of the foregoing claims. As work vehicle use can for instance be made of a grass mower, wherein the implement consists of a system of grass mowing modules.

In a particular embodiment the work vehicle according to the present invention is characterized in that the implement comprises a support arm which is provided on the frame and which is adjustable between a lateral operative position, in which the support arm extends laterally of the frame from the main shaft, and an at least partially upward oriented transport position, wherein the support arm comprises a plurality of mutually pivotable support arm parts on which work devices are provided.

In a further particular embodiment the work vehicle according to the present invention is characterized in that the work devices on the support arm each comprise a work member inside a housing and that the implements share a common drive line which passes from a drive device through the housings of the work devices in order to drive the work members.

The invention will now be further elucidated on the basis of an exemplary embodiment and an accompanying drawing. In the drawing:
- figure 1: shows a partial view of an embodiment of an implement according to the invention in an operative position; and
- figure 2: shows a detail view of the exemplary embodiment according to figure 1 of an implement according to the invention.

The figures are otherwise purely schematic and not drawn to scale. Some dimensions in particular may be exaggerated to greater or lesser extent for the sake of clarity. Corresponding parts are designated as far as possible in the figures with the same reference numeral.

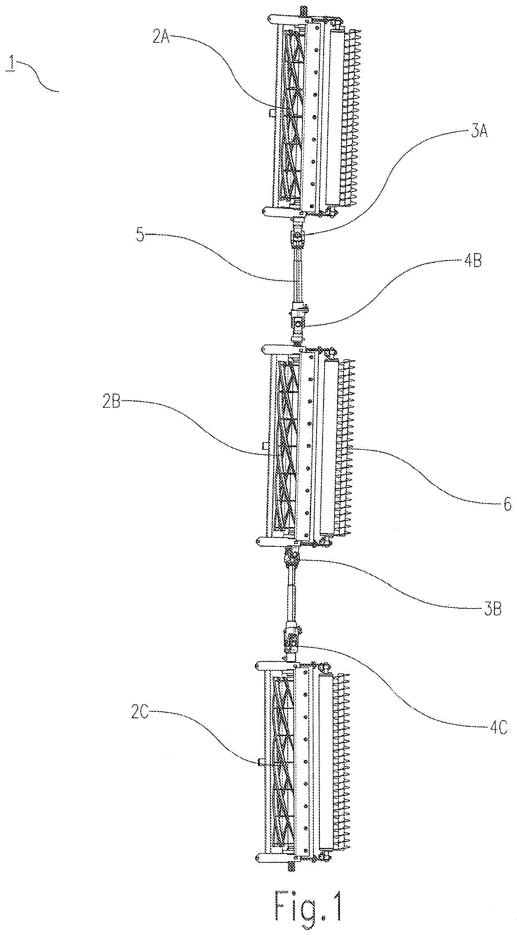

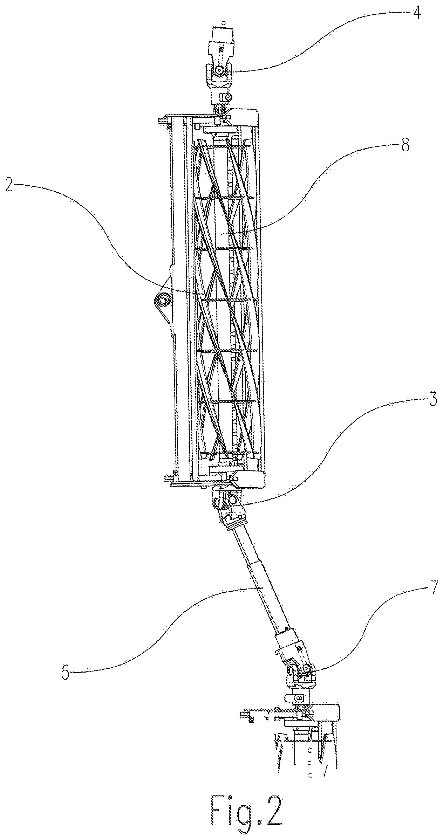

As shown in figures 1 and 2, implement 1 comprises three work devices 2A,2B,2C which are connected together and which in an operative position can perform work on a ground surface. The work devices together form a laterally extending work arm which can for instance be provided on a work vehicle for displacement with the work vehicle over the surface of the ground. The work vehicle can be an independently moving vehicle with a frame with driven displacing members such as wheels, but for instance also a trailer driven by a separate vehicle such as a tractor. In this exemplary embodiment use is made for the work devices of a mowing reel comprising a cylindrical cutting roller which is rotatablc along a longitudinal shaft relative to the ground in order to cut a top layer of a covering of for instance grass present on the ground surface with a number of cutting members forming the cutting roller.

The work devices are mutually coupled by means of a central drive shaft. The drive shaft is formed here by mutually coupled input and output shafts of the work devices. Work device 2B thus comprises an output shaft 3B which is coupled to an input shaft 4B of work device 2B and to an input shaft 4C of subsequent work device 2C. Input shaft 4B of work device 2B is coupled to output shaft 3A of work device 2A.

Owing to the mutual coupling of the input and output shafts of the work devices a driving from a drive device such as a motor (not shown) intended for the purpose is transmitted by a closest work device 2A to the other work devices 2B,2C placed downstream as seen from the drive device without a separate drive line or branch being necessary per work device for this purpose. The driving of the work devices in the implement is thus realized in exceptionally simple manner with a limited number of components.

Input drive shaft 4 and output shaft 3 of work devices 2 are mutually coupled by a shaft part 8 running inside the cutting roller through the mowing reels. Input drive shaft 4 and output shaft 3 thus form part of an integrally formed continuous shaft, this enhancing the durability of the shaft. A rotation of the continuous shaft can be transmitted directly here to the cutting roller in order to set it into operation.

Provided between output shaft 3 of a work device and input drive shaft 4 of a subsequent work device is a cardan shaft 5 coupled on either side to the respective shafts by means of a universal joint 7. A drive rotation of the one shaft can thus be transmitted to a subsequent shaft while mutual pivoting of the work devices remains possible. The work devices can thus be simultaneously driven and repositioned relative to the ground surface, this being desirable in the case of unevenness in the ground surface. In order to prevent successive work devices displacing relative to each other in the lateral direction here, wherein a ground surface is not worked uniformly over a working surface, the cardan shaft comprises a key body which is axially movable through a keyway of the cardan shaft. In the case of mutual pivoting of two successive work devices by means of the universal joints a resulting lateral displacement can be compensated by an axial displacement of the key body through the keyway.

Although the invention has been further elucidated with reference to only a few exemplary embodiments, it will be apparent that the invention is by no means limited thereto. On the contrary, many other variations and embodiments are possible within the scope of the invention, as defined in the appended claims, for the person with ordinary skill in the art.

## Claims

1. Implement (1) comprising a number of mowing devices (2A,2B,2C) for performing work therewith in an operative position, wherein the mowing devices each comprise a mowing member and an input drive shaft (4) driving said mowing member, and wherein at least one first mowing device (2A,2B) of said mowing devices comprises an output shaft (3A,3B) coupled to the input drive shaft (4B,4C) of a subsequent, second mowing device (2B,2C), wherein the input drive shaft and output shaft of said first mowing device and said input drive shaft of said subsequent, second mowing device are part of a continuous shaft (3,4,5,8), **characterised in that** said first and second mowing devices are reel mowers that each comprise at least one mowing reel having a central drive shaft (8), and **in that** said central drive shaft (8) of said at least one mowing reel is also part of said continuous drive shaft.

2. Implement as claimed in claim 1, **characterized in that** the output shaft (3A, 3B) is coupled pivotally to the input drive shaft (4B, 4C) of a subsequent mowing device.

3. Implement as claimed in claim 2, **characterized in that** a universal joint is provided between the output shaft (3A, 3B) and the input drive shaft (4B, 4C) of a subsequent mowing device.

4. Implement as claimed in claim 3, **characterized in that** between the output shaft (3A, 3B) and input drive shaft (4B, 4C) of a subsequent mowing device a cardan shaft is provided which is coupled on either side by means of a universal joint to the input drive shaft of a subsequent mowing device and the output shaft.

5. Implement as claimed in claim 4, **characterized in that** the cardan shaft is axially adjustable.

6. Implement as claimed in claim 5, **characterized in that** the cardan shaft comprises a key body which is axially movable through a keyway of the cardan shaft.

7. Implement as claimed in one or more of the foregoing claims, **characterized in that** a number of the mowing devices lie in line.

8. Implement as claimed in one or more of the foregoing claims, **characterized in that** the mowing devices extend from the implement by means of a support arm of a central part.

9. Work vehicle comprising a mobile frame with a main shaft and comprising an implement as claimed in one or more of the foregoing claims.

10. Work vehicle as claimed in claim 9, **characterized in that** the implement comprises a support arm which is provided on the frame and which is adjustable between a lateral operative position, in which the support arm extends laterally of the frame from the main shaft, and an at least partially upward oriented transport position, wherein the support arm comprises a plurality of mutually pivotable support arm parts on which the mowing devices are provided.

11. Work vehicle as claimed in claim 10, **characterized in that** the mowing devices on the support arm each comprise a mowing member inside a housing and that the implements share a common drive line which passes from a drive device through the housings of the work devices in order to drive the mowing members.

## Patentansprüche

1. Arbeitsgerät (1) umfassend eine Anzahl von Mähkörpern (2A, 2B, 2C) um in einer Arbeitsposition Arbeit zu verrichten, wobei jeder Mähkörper ein Mähglied und eine Antriebswelle (4) zum Antrieb des Mähgliedes umfasst, und wobei wenigstens ein erster Mähkörper (2A, 2B) der Mähkörper eine Abtriebswelle (3A, 3B) aufweist und mit der Antriebswelle (4B, 4C) eines nachfolgenden zweiten Mähkörpers (2B, 2C) verbunden ist, wobei die Antriebswelle und die Abtriebswelle des ersten Mähkörpers und der Antriebswelle des nachfolgenden zweiten Mähkörpers Teil einer durchgehenden Welle (3, 4, 5, 8) sind, **dadurch gekennzeichnet, dass** der erste und zweite Mähkörper Rollenmäher sind, wobei jeder wenigstens eine Mähspule mit einer zentralen Antriebswelle (8) aufweist, und wobei die zentrale Antriebswelle (8) der wenigstens einen Mähspule ein Teil der durchgehenden Welle ist.

2. Arbeitsgerät wie in Anspruch 1 beansprucht, **dadurch gekennzeichnet, dass** die Abtriebswelle (3A, 3B) drehbar mit der Antriebswelle (4B, 4C) eines nachfolgenden verbunden Mähkörpers ist.

3. Arbeitsgerät wie in Anspruch 2 beansprucht, **dadurch gekennzeichnet, dass** ein universeller Anschluss zwischen der Abtriebswelle (3A, 3B) und der Antriebswelle (4B, 4C) eines nachfolgenden Mähkörpers verfügbar ist.

4. Arbeitsgerät wie in Anspruch 3 beansprucht, **dadurch gekennzeichnet, dass** zwischen der Abtiebswelle (3A, 3B) und der Antriebswelle (4B, 4C) eines nachfolgenden Mähkörpers eine Kardanwelle verfügbar ist, die auf beiden Seiten mittels eines Kreuzgelenks mit der Antriebswelle einer nachfolgenden Mähvorrichtung und der Abtriebswelle gekoppelt ist.

5. Arbeitsgerät wie in Anspruch 4 beansprucht, **dadurch gekennzeichnet, dass** die Kardanwelle axial verstellbar ist.

6. Arbeitsgerät wie in Anspruch 5 beansprucht, **dadurch gekennzeichnet, dass** die Kardanwelle ein Schlüsselteil aufweist, das axial durch einen Schlüsselweg auf der Kardanwelle bewegbar ist.

7. Arbeitsgerät wie in einem der vorangegangenen Ansprüche beansprucht, **dadurch gekennzeichnet, dass** eine Anzahl von Mähkörpern in einer Linie angeordnet sind.

8. Arbeitsgerät wie in einem der vorangegangenen Ansprüche beansprucht, **dadurch gekennzeichnet, dass** sich die Mähkörper mittels eines Tragearms eines zentralen Teils ausdehnen.

9. Arbeitsfahrzeug umfassend einen mobilen Rahmen mit einer Hauptwelle, sowie ein Arbeitsgerät nach einem der vorangegangenen Ansprüche.

10. Arbeitsfahrzeug wie in Anspruch 9 beansprucht, **dadurch gekennzeichnet, dass** das Arbeitsgerät einen Tragearm aufweist, der an dem Rahmen angeordnet ist und der verstellbar zwischen einer lateralen Arbeitsposition, in der der Tragearm sich seitlich des Rahmens der Hauptwelle erstreckt, und einer wenigstens teilweise aufwärts orientierten Position, in der der Tragearm eine Mehrzahl an gemeinsamen drehbaren Tragearmteilen aufweist auf denen die Mähkörper verfügbar sind.

11. Arbeitsfahrzeug wie in Anspruch 10 beansprucht, **dadurch gekennzeichnet, dass** der Mähkörper auf jedem der Tragearme ein Mähglied in einem Gehäuse aufweist, und das die Arbeitsgeräte eine gemeinsame Antriebslinie teilen, welche von einer Antriebsvorrichtung durch die Gehäuse der Arbeitsvorrichtungen führt, um die Mähglieder anzutreiben.

## Revendications

1. Outil (1) comprenant plusieurs dispositifs de tonte (2A, 2B, 2C) permettant de réaliser des travaux dans une position opérationnelle, dans lequel les dispositifs de tonte comprennent chacun un élément de tonte et un arbre de transmission d'entrée (4) entraînant ledit élément de tonte, et dans lequel au moins un premier dispositif de tonte (2A, 2B) parmi lesdits dispositifs de tonte comprend un arbre de sortie (3A, 3B) couplé à l'arbre de transmission d'entrée (4A, 4C) d'un second dispositif de tonte (2B, 2C) consécutif, dans lequel l'arbre de transmission d'entrée et l'arbre de sortie dudit premier dispositif de tonte et dudit arbre de transmission d'entrée dudit second dispositif de tonte consécutif font partie d'un arbre continu (3, 4, 5, 8), **se caractérisant en ce que** lesdits premier et second dispositifs de tonte sont des tondeuses à rouleau qui comprennent chacune au moins un rouleau de tonte possédant un arbre de transmission central (8), et **en ce que** ledit arbre de transmission central (8) dudit rouleau de tonte fait également partie dudit arbre de transmission continu.

2. Outil selon la revendication 1, **se caractérisant en ce que** l'arbre de sortie (3A, 3B) est couplé de manière pivotante à l'arbre de transmission d'entrée (4B, 4C) d'un dispositif de tonte consécutif.

3. Outil selon la revendication 2, **se caractérisant en ce qu'**un joint universel est disposé entre l'arbre de sortie (3A, 3B) et l'arbre de transmission d'entrée (4B, 4C) d'un dispositif de tonte consécutif.

4. Outil selon la revendication 3, **se caractérisant en ce qu'**un arbre à cardan est disposé entre l'arbre de sortie (3A, 3B) et l'arbre de transmission d'entrée (4B, 4C) d'un dispositif de tonte consécutif, ledit arbre à cardan étant couplé de chaque côté à l'aide d'un joint universel à l'arbre de transmission d'entrée d'un dispositif de tonte consécutif et à l'arbre de sortie.

5. Outil selon la revendication 4, **se caractérisant en ce que** l'arbre à cardan est ajustable axialement.

6. Outil selon la revendication 5, **se caractérisant en ce que** l'arbre à cardan comprend un organe central qui peut être déplacé axialement le long d'une rainure de l'arbre à cardan.

7. Outil selon une ou plusieurs des revendications précédentes, **se caractérisant en ce que** plusieurs des dispositifs de tonte sont disposés en ligne.

8. Outil selon une ou plusieurs des revendications précédentes, **se caractérisant en ce que** les dispositifs de tonte se déploient depuis l'outil à l'aide d'un bras porteur d'une pièce centrale.

9. Véhicule de travail comprenant un cadre mobile avec un arbre principal et comprenant un outil selon une ou plusieurs des revendications précédentes.

10. Véhicule de travail selon la revendication 9, **se caractérisant en ce que** l'outil comprend un bras porteur qui est disposé sur le cadre et qui est ajustable entre une position opérationnelle latérale, dans laquelle le bras porteur se déploie latéralement par rapport au cadre à partir de l'arbre principal, et une position de transport au moins partiellement orientée vers le haut, le bras porteur comprenant une pluralité de pièces de bras porteur pouvant pivoter les unes par rapport aux autres sur lesquelles les dispositifs de tonte sont disposés.

11. Véhicule de travail selon la revendication 10, **se caractérisant en ce que** les dispositifs de tonte sur le bras porteur comprennent chacun un élément de tonte à l'intérieur d'un logement et **en ce que** les outils partagent une ligne de transmission commune qui part d'un dispositif de transmission et passe à travers les logements des dispositifs de travail afin d'entraîner les éléments de tonte.
